# EUROPÄISCHE PATENTSCHRIFT

(11) **EP 3 584 105 B1**
(45) Veröffentlichungstag und Bekanntmachung des Hinweises auf die Patenterteilung: **17.02.2021**
(21) Anmeldenummer: 19174296.4
(22) Anmeldetag: 14.05.2019
(51) Int. Cl.: B60K 35/00, B60K 15/03, H01R 13/66, B60K 15/05

(54) **LADE- UND/ODER TANKKLAPPENMODUL FÜR EIN KRAFTFAHRZEUG**
LOADING AND/OR TANK FLAP MODULE FOR A MOTOR VEHICLE
MODULE DE HAYON ET/OU DE TRAPPE À CARBURANT POUR UN VÉHICULE AUTOMOBILE

(30) Priorität: 19.06.2018 DE 102018209848
(43) Veröffentlichungstag der Anmeldung: 25.12.2019
(73) Patentinhaber: Volkswagen AG, 38440 Wolfsburg (DE)
(72) Erfinder: Winkler, Bernd, 38165 Lehre (DE); Kipke, Peter, 38556 Bokensdorf (DE)

(56) Entgegenhaltungen:
- EP-A2- 1 103 794
- DE-A1-102012 211 048
- DE-A1-102017 006 157
- US-A1- 2013 134 937
- US-A1- 2013 326 955

## Beschreibung

Die Erfindung betrifft ein Lade- und/oder Tankklappenmodul für ein Kraftfahrzeug mit den Merkmalen des Oberbegriffs des Patentanspruchs 1. Die Erfindung betrifft auch eine Vorrichtung zur Beleuchtung des Lade- und/oder Tankklappenmoduls gemäß den Merkmalen des Oberbegriffs des Patentanspruchs 5.

Ein derartiges Lade- und/oder Tankklappenmodul sowie eine derartige Vorrichtung sind aus der DE 10 2011 114 075 A1 bekannt geworden. Konkret wird in dieser Schrift unter anderem ein in einer Tankmulde angeordnetes Kombiinstrument beschrieben, welches ringförmig um eine Tanköffnung angeordnet ist. In dem Kombiinstrument ist eine ringförmige Lichtquelle zur Beleuchtung der Tankmulde mit einem Anzeigemittel zur Anzeige des Tankfüllstandes kombiniert. Das Anzeigemittel besteht aus mehreren, ebenfalls ringförmig um die Tanköffnung angeordneten Leuchtdioden (LEDs).

Der Nachteil dieser Lösung liegt darin, dass durch die ringförmig um die Tanköffnung angeordnete Lichtquelle zur Beleuchtung der Tankmulde die Möglichkeit einer Blendung eines Bedieners besteht. Darüber hinaus ist das Kombiinstrument sehr raumfordernd aufgebaut.

In der DE 10 2012 211 048 A1 ist eine Ladevorrichtung zum Laden eines Ladungsspeichers eines elektrisch antreibbaren Kraftfahrzeugs beschrieben. Die Ladevorrichtung weist eine Koppeleinrichtung zum Einstecken eines Ladesteckers auf. Zur Beleuchtung der Koppeleinrichtung ist diese von einem im Umriss c-förmigen Lichtleiter umgeben, in dessen c-Schenkel stirnseitig Licht von Lichtquellen eingekoppelt wird. In Richtung des Bedieners ist der Lichtleiter verdeckt, so dass die Koppeleinrichtung durch aus dem Lichtleiter ausgekoppeltes Licht indirekt beleuchtet wird. Der Lichtleiter fungiert sowohl als Suchbeleuchtung wie auch als Kontrollleuchte für die jeweilige Anzeige des Ladestatus des Ladungsspeichers. Auch diese Lösung zur Beleuchtung der Koppeleinrichtung ist sehr bauraumintensiv.

Die US 2013/134937 A1 beschreibt eine Ladevorrichtung. Die Ladevorrichtung besteht aus einem gehäuseartigen Ladezugang, welcher in eine Karosserie in üblicher Weise eingelassen ist und eine Ladeschnittstelle zum Aufladen einer Traktionsbatterie aufweist.

In einer ersten Öffnung, welche sich in einer oberen Montagewandung einer Gehäusevertiefung der Ladevorrichtung befindet, ist eine Beleuchtungsvorrichtung in Form einer Lichtquelle befestigt. Die Beleuchtungsvorrichtung dient zur Beleuchtung eines Benutzers, der Ladeschnittstelle sowie zur Beleuchtung eines vorderen, linken Bereichs des Ladezugangs, in einer Draufsicht auf den Ladezugang gesehen.
In einer zweiten Öffnung, welche sich in einer linksseitigen Stufenwandung der Gehäusevertiefung der Ladevorrichtung befindet, ist eine Anzeigevorrichtung eingelassen.
Die Anzeigevorrichtung dient zur Anzeige eines Ladezustandes, wobei die Anzeigevorrichtung Licht in einer anderen Farbe aussendet wie die Beleuchtungsvorrichtung.

In der US 2013/0326955 A1 wird ein in einer Vertiefung einer Karosserie eines Elektrofahrzeugs eingelassenes Ladeklappenmodul beschrieben. Das Ladeklappenmodul weist eine Ladeschnittstelle, eine Beleuchtungsvorrichtung zur Beleuchtung des Ladeklappenmoduls sowie eine Anzeigevorrichtung zur Anzeige eines Ladezustandes auf. Ein Deckel dient zum Öffnen oder Verschließen des Ladeklappenmoduls. Der Deckel ist mit einem Push/Push-Mechanismus wirkverbunden. Bei Öffnen des Deckels wird durch Drücken des Push/Push-Mechanismus ein Schalter betätigt, wodurch die Anzeigevorrichtung und auch die Beleuchtungsvorrichtung über eine Steuereinheit aktiviert werden.

Aus der EP 1 103 794 A2 ist eine Füllstandsanzeige für einen Waschwasserbehälter bekannt geworden, die über eine Steuereinheit mit einem beim Waschwasserbehälter angeordneten Füllstandssensor verbunden ist. Die Füllstandsanzeige besteht aus einer Glühlampe und einem Anzeigeelement für den Füllstand, wobei das Anzeigeelement durch das Licht der Glühlampe beleuchtet wird. Das Anzeigeelement selbst ist neben einem Tankeinfüllstutzen befestigt.

Schließlich ist der DE 10 2011 108 817 A1 noch eine Ladeeinrichtung für ein Elektrofahrzeug zu entnehmen, bei der um die Ladesteckdose herum segmentartige Leuchtmittel derart aneinandergereiht sind, dass sie um die Ladesteckdose einen geschlossenen Kranz ausbilden. Die Leuchtmittel dienen zum einen zur Beleuchtung der Ladesteckdose, zum anderen bieten sie eine Art Skalierung, die zur Veranschaulichung des Ladezustands einer Batterie vom Elektrofahrzeug dienen kann.

Durch die großflächige und direkte Abstrahlung des Lichts zur Beleuchtung der Ladesteckdose besteht allerdings auch hier die Möglichkeit der Blendung eines Bedieners. Ebenfalls erfordert die Beleuchtung viel Bauraum und viele Leuchtmittel.

Vor dem Hintergrund des genannten Standes der Technik liegt der vorliegenden Erfindung die Aufgabe zu Grunde, ein Lade- und/oder Tankklappenmodul gemäß den Merkmalen des Oberbegriffs des Patentanspruchs 1 bereitzustellen, welches effizient und kostengünstig beleuchtet werden kann und welches darüber hinaus noch Informationen über den Lade- und/oder Tankfüllstand eines Energiespeichers vom Kraftfahrzeug geben kann.

Des Weiteren liegt der Erfindung noch die Aufgabe zu Grunde, eine geeignete Vorrichtung zur Beleuchtung eines solchen Lade- und/oder Tankklappenmoduls bereitzustellen.

Vorliegende Aufgaben werden durch ein Lade- und/oder Tankklappenmodul mit den Merkmalen des Patentanspruchs 1 und durch eine Vorrichtung mit den Merkmalen des Patentanspruchs 5 gelöst.

Vorteilhafte Ausbildungen beziehungsweise Weiterbildungen der Erfindung sind jeweils den abhängigen Ansprüchen zu entnehmen.

Es wird zunächst von einem Lade- und/oder Tankklappenmodul für ein Kraftfahrzeug ausgegangen, welches zur Aufnahme oder Anlage wenigstens einer Schnittstelle zum Aufladen und/oder Betanken eines kraftfahrzeugseitigen Energiespeichers ausgebildet ist. Das Lade- und/oder Tankklappenmodul ist auch zur Befestigung wenigstens einer Leuchtmittel aufweisenden Vorrichtung ausgebildet, die sowohl zur Beleuchtung des Lade- und/oder Tankklappenmoduls als auch zur Anzeige des aktuellen Lade- und/oder Tankfüllstandes des kraftfahrzeugseitigen Energiespeichers dient.

Wenn es sich bei dem Kraftfahrzeug um ein durch Kraftstoff konventionell angetriebenes Kraftfahrzeug handelt, so ist die Schnittstelle als Einfüllstutzen (verschließbare Tanköffnung) ausgebildet. Handelt es sich um ein elektrisch antreibbares Kraftfahrzeug, so ist die Schnittstelle als Ladesteckdose ausgebildet.

Es ist aber auch durchaus denkbar, dass das Lade- und/oder Tankklappenmodul mehrere Schnittstellen aufweist. Dies kann beispielsweise dann der Fall sein, wenn es sich bei dem Kraftfahrzeug um ein Hybridfahrzeug handelt. In einem solchen Fall ist denkbar, dass das Lade- und/oder Tankklappenmodul zur Aufnahme oder Anlage einer konventionellen Tanköffnung und gleichzeitig auch einer Ladesteckdose dient. Auch das Vorhandensein von zwei unterschiedlich ausgebildeten Ladesteckdosen oder Tanköffnungen ist möglich.

Üblicherweise befindet sich ein Lade- und/oder Tankklappenmodul auf einer Seite des Kraftfahrzeugs, vorzugsweise im Bereich der Hinterräder. Abweichend davon kann das Lade- und/oder Tankklappenmodul natürlich auch an anderen Stellen des Kraftfahrzeugs angeordnet sein, beispielsweise im Front- oder auch im Heckbereich des Kraftfahrzeugs. Die Erfindung schlägt nun vor, dass das Lade- und/oder Tankklappenmodul wenigstens eine erste Öffnung und eine zu dieser benachbarte, zweite Öffnung aufweist. Die Öffnungen dienen zur zumindest teilweisen Aufnahme der Vorrichtung, welche sowohl zur Beleuchtung des Lade- und/oder Tankklappenmoduls als auch zur Anzeige des aktuellen Lade- und/oder Tankfüllstandes dient. Die Öffnungen sind derart ausgerichtet, dass abgegebenes oder abgebbares Licht der montierten Vorrichtung aus der ersten Öffnung in Richtung eines Bedieners austreten kann und aus der zweiten Öffnung in Richtung der Schnittstelle zum Aufladen und/oder Betanken des Energiespeichers.

Auf diese Weise wird die Voraussetzung für eine sehr effektive Beleuchtung der Schnittstelle zum Aufladen und/oder Betanken des Energiespeichers geschaffen. Des Weiteren führt diese Lösung auch zu einer sehr kompakten Anordnung, obwohl eine Doppelfunktion gewährleistet ist, nämlich einerseits die Ausbildung einer Suchbeleuchtung für die Schnittstelle und andererseits die optische Anzeige von Informationen über den Lade- und/oder Tankfüllstand des Energiespeichers.

In einer ersten Weiterbildung der Erfindung wird vorgeschlagen, dass die erste Öffnung und die zweite Öffnung Flächenerstreckungen aufweisen, die in einem rechten Winkel zueinanderstehen. Dies trägt dazu bei, dass die genannte Doppelfunktion auf einfache und kompakte Weise realisiert werden kann.

Es ist sehr zweckmäßig, wenn in einer vorteilhaften Ausbildung des Erfindungsgedankens die erste Öffnung in einer ersten Ebene liegt und eine weitere Öffnung zur Aufnahme oder Anlage der wenigstens einen Schnittstelle in einer zweiten Ebene. Die Ebenen sind in einem Winkel einander zugewandt. Dies trägt zu einer effektiven Beleuchtung der Schnittstelle durch die Vorrichtung bei. Der Winkel, den die beiden Ebenen miteinander einnehmen ist vorzugsweise ein stumpfer Winkel. Er liegt vorzugsweise zwischen etwa 120° und 170°, besonders bevorzugt zwischen etwa 130° und 160°.

Erfindungsgemäß wird die Vorrichtung zur Beleuchtung des Lade- und/oder Tankklappenmoduls und zur Anzeige des aktuellen Lade- und/oder Tankfüllstandes durch ein Gehäuse gebildet, welches lösbar mit dem Lade- und/oder Tankklappenmodul verbunden ist. Hierdurch wird die Wartung des Lade- und/oder Tankklappenmoduls erleichtert und die Kosten im Reparaturfall können gesenkt werden. Das Gehäuse kann bevorzugt mit dem Lade- und/oder Tankklappenmodul verschraubt oder verrastet sein. Hierdurch wird ein sehr leichter Austausch des Gehäuses im Fehlerfall ermöglicht.

Gemäß einer anderen Weiterbildung kann das Lade- und/oder Tankklappenmodul durch ein Zweikomponenten-Bauteil gebildet sein. In diesem Fall sind die Öffnungen für die Vorrichtung in einer Hartkomponente des Zweikomponenten-Bauteils ausgebildet und wenigstens eine weitere Öffnung zur Aufnahme oder Anlage der wenigstens einen Schnittstelle ist in einer Weichkomponente des Zweikomponenten-Bauteils ausgebildet.

Auf diese Weise wird zum einen eine stabile Ausrichtung der Beleuchtung und Anzeige durch die Vorrichtung gewährleistet, auf der anderen Seite sind so Ausgleichsbewegungen der Schnittstelle bei einem Tank- und/oder Ladevorgang möglich.

Wie anfangs erwähnt, soll mit der Erfindung auch eine Vorrichtung unter Schutz gestellt werden. Bei der Vorrichtung handelt es sich um eine Vorrichtung zur Beleuchtung eines Lade- und/oder Tankklappenmoduls. Die Vorrichtung dient auch zur Anzeige eines aktuellen Lade- und/oder Tankfüllstandes eines mittels des Lade- und/oder Tankklappenmoduls aufladbaren und/oder auftankbaren Energiespeichers eines Kraftfahrzeugs.

Hinsichtlich der Vorrichtung schlägt die Erfindung nun vor, dass diese durch ein Gehäuse gebildet ist, in dem wenigstens zwei Leuchtmittel aufgenommen sind. Erzeugtes oder erzeugbares Licht wenigstens eines Leuchtmittels tritt an einem ersten lichtdurchlässigen Lichtaustrittsbereich aus dem Gehäuse aus. Erzeugtes oder erzeugbares Licht wenigstens eines anderen Leuchtmittels tritt an einem zweiten lichtdurchlässigen Lichtaustrittsbereich aus dem Gehäuse aus. Dabei lässt der erste Lichtaustrittsbereich das Licht in eine andere Richtung austreten als der zweite Lichtaustrittsbereich.

Auf diese Weise wird durch die Vorrichtung die Grundvoraussetzung dafür geschaffen, dass diese beim Einbau in das Lade- und/oder Tankklappenmodul die genannte Doppelfunktion realisieren kann.

Die Vorrichtung kann dadurch weitergebildet sein, dass der erste Lichtaustrittsbereich mit einer Flächenerstreckung senkrecht zu einer Flächenerstreckung des zweiten Lichtaustrittsbereichs steht. Auf diese Weise wird die Realisierung der genannten Doppelfunktion noch weiter erleichtert und eine kompakte Bauweise des Gehäuses begünstigt.

Um den konstruktiven Aufwand für die Vorrichtung zu reduzieren, wird vorgeschlagen, dass das über den zweiten Lichtaustrittsbereich aus dem Gehäuse austretende Licht über einen Lichtleiter vom Leuchtmittel zum Lichtaustrittsbereich geleitet wird. Insbesondere wird dadurch ermöglicht, dass nur eine Platine zur Aufnahme der wenigstens zwei Leuchtmittel notwendig ist und dabei für die Anzeige des Lade- und/oder Tankfüllstandes ein ausreichender Abstand des Leuchtmittels zum Lichtaustrittsbereich zwecks homogener Lichtabstrahlung erhalten werden kann. Besonders bevorzugt lenkt der Lichtleiter in ihn eingekoppeltes Licht um 90 Grad um. Somit ist die Vorrichtung optimal an die Ausrichtung der Lichtaustrittsöffnungen des Lade- und/oder Tankklappenmoduls angepasst.

Das Bedürfnis der Kunden nach einer markenspezifischen Individualisierung ihrer Fahrzeuge ist hoch. Diesem Bedürfnis kann dadurch Rechnung getragen werden, wenn der erste Lichtaustrittsbereich mit einer lichtundurchlässigen Schicht überzogen ist und die Schicht bereichsweise derart entfernt ist, dass dadurch ein Symbol ausgebildet wird. Das Symbol kann beispielsweise ein markenspezifisches Logo sein. Wenn Licht durch die Leuchtmittel der Vorrichtung abgestrahlt wird, so erscheint für einen Bediener das Logo bei einem Tank- oder Ladevorgang deutlich sichtbar.

Um eine leichte Austauschbarkeit des Gehäuses zu gewährleisten, wird in einer Verwirklichung der erfindungsgemäßen Vorrichtung noch vorgeschlagen, dass Befestigungsmittel zur lösbaren Befestigung mit dem Lade- und/oder Tankklappenmodul vorhanden sind. Die Befestigungsmittel können beispielsweise als Schraublöcher oder Rastmittel ausgebildet sein. Im Gegenzug kann das Lade- und/oder Tankklappenmodul mit entsprechenden Schraubdomen oder Gegenrastmitteln ausgestattet sein.

Zur leichten und unkomplizierten elektrischen Verbindung der Vorrichtung mit der Elektrik eines Kraftfahrzeugs weist das Gehäuse vorzugsweise wenigstens einen Steckanschluss zur Verbindung mit einem Steckerbinder auf. Durch die Steckverbindung kann dann zum einen die elektrische Energie zum Betreiben der Leuchtmittel und zum anderen der Signalfluss zu einem Sensor oder einer Energiemanagementeinrichtung geschaffen werden, wodurch der Lade- oder Tankfüllstand eines fahrzeugseitigen Energiespeichers erfasst bzw. überwacht wird.

Schließlich soll mit der Erfindung auch ein Kraftfahrzeug unter Schutz gestellt werden, welches wenigstens ein erfindungsgemäßes Lade- und/oder Tankklappenmodul aufweist.

Bevorzugte Ausführungsbeispiele der Erfindung sind in den Figuren dargestellt und werden anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorzuheben.

Es zeigen, jeweils schematisch
- Fig. 1: eine perspektivische Darstellung eines Ladeklappenmoduls für ein elektrisch antreibbares Kraftfahrzeug,
- Fig. 2: eine perspektivische Darstellung einer Vorrichtung zur Beleuchtung des Ladeklappenmoduls und zur Anzeige des aktuellen Ladezustands,
- Fig. 3: eine vergrößerte Teilansicht des Ladeklappenmoduls,
- Fig. 4: eine prinziphafte Schnittdarstellung gemäß Schnittverlauf IV aus Fig. 3,
- Fig. 5: eine prinziphafte Darstellung der Anordnung von Leuchtmitteln im Gehäuse der Beleuchtungsvorrichtung, in einer ersten Ausführungsform,
- Fig. 6: eine prinziphafte Darstellung der der Anordnung von Leuchtmitteln im Gehäuse der Beleuchtungsvorrichtung, in einer bevorzugten Ausführungsform,
- Fig. 7: eine detaillierte Darstellung eines Teils des Gehäuses von der Beleuchtungsvorrichtung, in der besonders bevorzugten Ausführungsform,
- Fig. 8: die Darstellung eines Lichtaustrittsbereichs des Gehäuses,
- Fig. 9: die Darstellung des Lichtaustrittsbereichs gemäß Ansicht IX aus Fig. 8 und
- Fig. 10: die Darstellung eines elektrisch antreibbaren Fahrzeugs mit einem erfindungsgemäßen Ladeklappenmodul von oben.

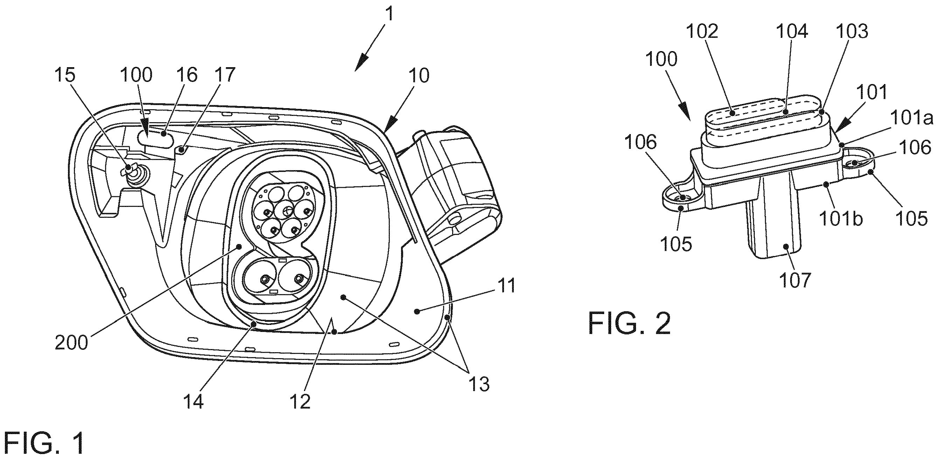

In der Fig. 1 ist ein Ladeklappenmodul 1 für ein elektrisch antreibbares Kraftfahrzeug ersichtlich. Das Ladeklappenmodul 1 besteht zum großen Teil aus einem mulden- oder wannenartigen Zweikomponenten-Bauteil 10, welches eine Hartkomponente 11 und eine damit verbundene Weichkomponente 13 aufweist. Die Hartkomponente 11 kann beispielsweise aus einem harten Kunststoff bestehen, vorzugsweise Polypropylen (PP). Für die Weichkomponente 13 kann vorzugsweise ein gummiartiger Kunststoff, beispielsweise ein thermoplastisches Elastomer (TPE) zum Einsatz kommen.

In der Weichkomponente 13 ist eine zentrale Öffnung 14 eingebracht. Diese Öffnung 14 dient zur Freigabe einer von hinten an die Weichkomponente 13 angelegten, fahrzeugseitigen Schnittstelle 200 zum Aufladen eines Energiespeichers eines hier nicht näher dargestellten Kraftfahrzeugs. Im Ausführungsbeispiel ist die Schnittstelle 200 als Ladesteckdose ausgebildet.

Abweichend vom Ausführungsbeispiel ist es, je nach Ausbildung des Kraftfahrzeugs, auch denkbar, dass die Schnittstelle 200 als Tankeinfüllstutzen ausgebildet ist. Kombinationen unterschiedlich ausgebildeter Schnittstellen sind ebenfalls denkbar.

Das Ladeklappenmodul 1 weist ein elektrisch ansteuerbares Verriegelungselement 15 zum Verriegeln einer hier nicht näher dargestellten, das Ladeklappenmodul 1 verdeckenden Abdeckklappe auf.

Über dem Verriegelungselement 15, im Randbereich des Zweikomponenten-Bauteils 10 ist in der Hartkomponente 11 eine längliche Öffnung 16 eingebracht. Unmittelbar benachbart zur Öffnung 16 ist eine zweite Öffnung 17 in der Hartkomponente 11 vorhanden.

Die Öffnungen 16 und 17 dienen zur teilweisen Aufnahme einer Vorrichtung 100, welche später noch näher beschrieben wird.

Die Vorrichtung 100 dient einerseits zur Beleuchtung der Schnittstelle 200, andererseits dient sie zur Anzeige des Ladezustands für einen Bediener.

Aus der Figur ist ersichtlich, dass die Hartkomponente 11 rahmenartig ausgebildet ist und die Weichkomponente 13 im Randbereich stabilisiert. Über eine große Öffnung 12 gibt die Hartkomponente 11 einen Großteil der Weichkomponente 13 und deren Öffnung 14 mitsamt der an der Öffnung 14 anliegenden Schnittstelle 200 frei.

Die Fig. 2 zeigt die Vorrichtung 100 in Alleinstellung. Diese weist ein Gehäuse 101 auf, mit einem Oberteil 101a und einem Unterteil 101b. Das Oberteil 101a kann mit dem Unterteil 101b beispielsweise verklipst oder auch verklebt sein.

Das Oberteil 101a weist einen länglichen, im Umriss ovalartigen Lichtaustrittsbereich 102 auf. Der Lichtaustrittsbereich 102 füllt in Montageposition der Vorrichtung 100 die genannte Öffnung 16 in der Hartkomponente 11 aus (vgl. auch Fig. 1). Somit kann erzeugtes Licht in Richtung eines Bedieners austreten. Der Lichtaustrittsbereich 102 dient als Ladezustandsanzeige.

Der Lichtaustrittsbereich 102 geht über einen Absatz 104 in einen Lichtaustrittsbereich 103 über, welcher in etwa senkrecht zum Lichtaustrittsbereich 102 ausgerichtet ist. Dies wird später noch näher beschrieben.

Das Unterteil 101b des Gehäuses 101 ist mit Befestigungsmitteln 105 zur lösbaren Befestigung der Vorrichtung 100 an der Hartkomponente 11 des Ladeklappenmoduls 1 ausgestattet.

Wie ersichtlich ist, weist die Vorrichtung 100 im Umriss eine längliche Form auf, deren gegenüberliegende Enden durch die Befestigungsmittel 105 ausgebildet sind. Die Befestigungsmittel 105 weisen Öffnungen 106 auf, die zum Durchtritt von Befestigungsschrauben dienen, mit deren Hilfe die Vorrichtung 100 an Befestigungsdomen (nicht ersichtlich) der Hartkomponente 11 befestigt werden kann.

Das Unterteil 101b geht schließlich in einen Steckanschluss 107 über. Der Steckanschluss 107 dient zum Einstecken eines kraftfahrzeugseitigen Steckverbinders (nicht dargestellt) und damit zur Sicherstellung einer Energieversorgung sowie einer geeigneten Signalübertragung.

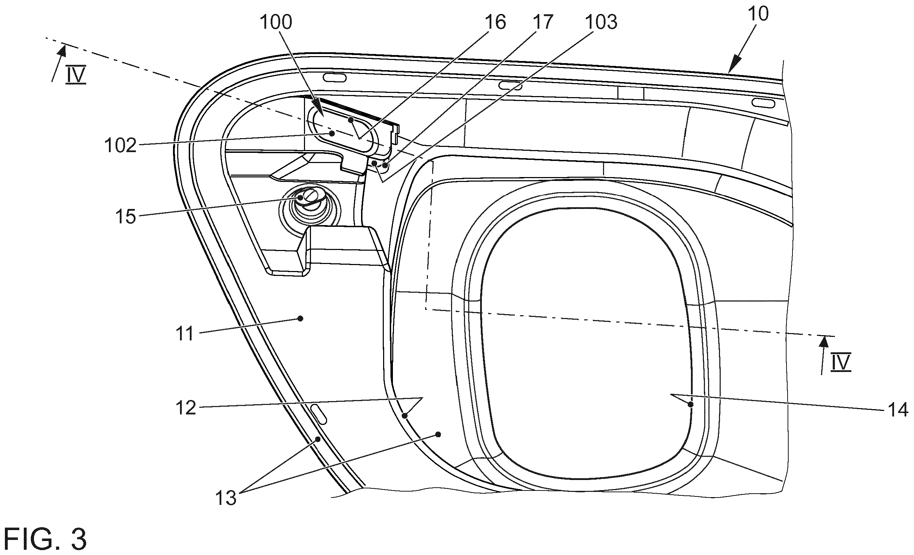

Aus der Fig. 3 ist das Zweikomponenten-Bauteil 10 noch etwas vergrößert im Bereich der Öffnungen 16 und 17 dargestellt. Hieran ist besonders gut ersichtlich, wie die Vorrichtung 100 im Montagezustand zum Teil in die Öffnungen 16 und 17 hineinragt. Somit kann sehr effektiv und auf kompakte Art und Weise durch die Öffnung 16 die Ladezustandsanzeige erfolgen und mittels der Öffnung 17 eine direkte Beleuchtung in Richtung der Öffnung 14 beziehungsweise in Richtung der Schnittstelle 200 (hier nicht dargestellt) sichergestellt werden.

Die Öffnungen 16 und 17 sind zur Öffnung 14 geneigt. Auf diese Weise kann die Ausleuchtung im Bereich der Öffnung 14 optimiert werden.

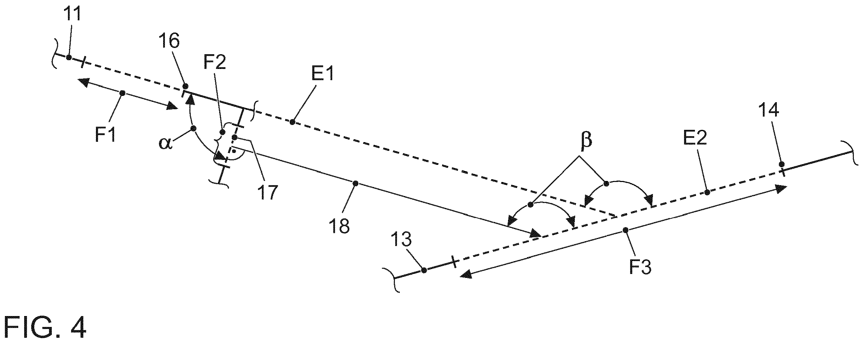

Dies ist besonders gut an der Fig. 4 zu erkennen, welche prinziphaft die vorteilhafte geometrische Ausgestaltung darstellt:
So ist ersichtlich, dass die Öffnung 16 in der Hartkomponente 11 eine Flächenerstreckung F1 aufweist, welche in eine erste Ebene E1 fällt. Die zweite Öffnung 17 weist eine Flächenerstreckung F2 auf, welche einen Winkel α von etwa 90 Grad zur Ebene E1 aufweist, also in etwa senkrecht zu dieser ausgerichtet ist.

Die in der Weichkomponente 13 eingebrachte Öffnung 14 weist eine Flächenerstreckung F3 auf, welche in einer Ebene E2 liegt. Die Ebenen E1 und E2 sind in einem Winkel β aufeinander zu gerichtet, wobei der Winkel β vorzugsweise ein stumpfer Winkel ist. Vorzugsweise liegt der Winkel β zwischen etwa 120° und 170°, besonders bevorzugt zwischen etwa 130° und 160°.

Mit anderen Worten sind die Ebenen E1 und E2 derart ausgerichtet, dass eine senkrecht zur Flächenerstreckung F2 der Öffnung 17 stehende Flächennormale 18 ebenfalls im Winkel β auf die Ebene E2 beziehungsweise die Flächenerstreckung F3 der Öffnung 14 fällt.

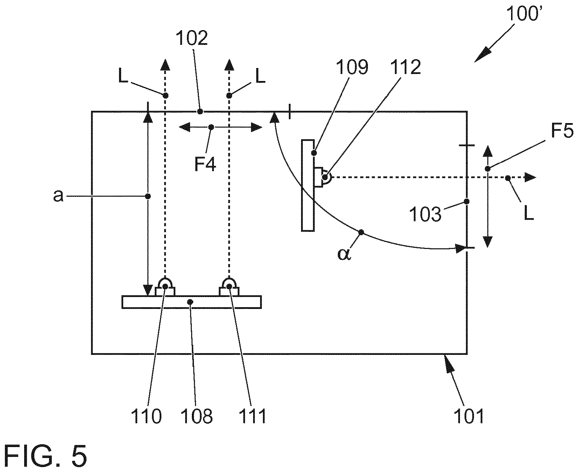

Anhand der Fig. 5 soll eine Ausführungsform einer Vorrichtung 100' skizziert werden, welche eine mögliche Anordnung von Leuchtmitteln im Gehäuse 101 der Vorrichtung 100' darstellt.

Dabei ist ersichtlich, dass im Gehäuse 101 eine erste Platine 108 mit zwei Leuchtmitteln 110 und 111 aufgenommen ist. Eine zweite Platine 109 ist senkrecht zur Platine 108 ausgerichtet und trägt ein weiteres Leuchtmittel 112. Die Leuchtmittel 110 bis 112 sind vorzugsweise als Leuchtdioden, besonders bevorzugt als RGB-Leuchtdioden ausgebildet. Diese können, je nach Ansteuerung, Licht in beliebigen Farben aussenden.

Auch das Gehäuse 101 der Vorrichtung 100' weist einen ersten transparenten Lichtaustrittsbereich 102 mit einer Flächenerstreckung F4 und einen zweiten transparenten Lichtaustrittsbereich 103 mit einer Flächenerstreckung F5 auf. Die Flächenerstreckungen F4 und F5 sind vorzugsweise in einem rechten Winkel α zueinander ausgerichtet.

Das Licht der Leuchtmittel 110 und 111 tritt am Lichtaustrittsbereich 102 nach außen aus, das Licht des Leuchtmittels 112 am Lichtaustrittsbereich 103.

Die dargestellte Aufspaltung in die zwei Platinen 108 und 109 ermöglicht trotz Realisierung einer Lichtabstrahlung in zwei unterschiedliche Richtungen die Einhaltung eines bestimmten Abstandes a der Platine 108 zum Lichtaustrittsbereich 102. Ein solcher ist erforderlich, um sogenannte Hotspots (punktförmige Lichterscheinungsbilder) für einen Bediener zu vermeiden und ein homogenes Lichterscheinungsbild für die Ladezustandsanzeige zu ermöglichen. Dies ist für das Licht L des Leuchtmittels 112 nicht notwendig, da dieses Licht lediglich als Suchbeleuchtung für die Schnittstelle 200 dient und in der Montageposition der Vorrichtung 100' der Lichtaustrittsbereich 103 durch einen Bediener nicht direkt sichtbar ist.

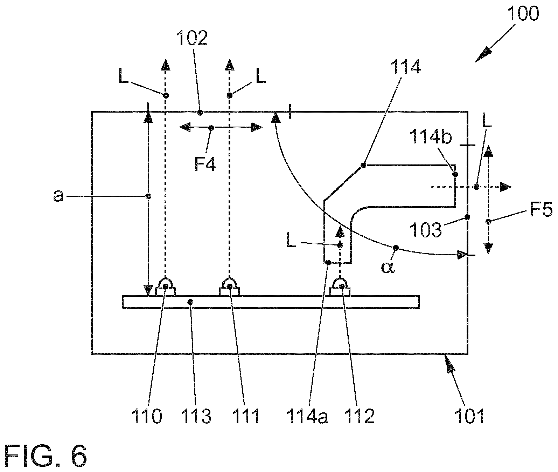

In Fig. 6 ist eine vergleichbare Prinzipdarstellung für die bevorzugte Vorrichtung 100 ersichtlich. Bei dieser Lösung ist ein Lichtleiter 114 eingesetzt. Auf diese Weise können alle drei Leuchtmittel 110, 111 und 112 auf einer einzigen Platine 113 angeordnet sein. Dies trägt zu einer kompakten und einfachen Bauweise der Vorrichtung 100 bei.

Auch bei dieser bevorzugten Lösung sind die Flächenerstreckungen F4 und F5 der Lichtaustrittsbereiche 102 und 103 in einem rechten Winkel α zueinander ausgerichtet.

Das Licht L der Leuchtmittel 110 und 111 tritt gegebenenfalls nach Sammlung über ein optisches Element (nicht dargestellt) aus dem Lichtaustrittsbereich 102 aus. Das Licht L des Leuchtmittels 112 hingegen tritt an einer stirnseitigen Lichteinkoppelfläche 114a in den Lichtleiter 114 ein, wird in diesem in eine Richtung um etwa 90 Grad umgelenkt und tritt an einer ebenso stirnseitigen Lichtauskoppelstelle 114b wieder aus dem Lichtleiter 114 und schließlich aus dem Lichtaustrittsbereich 103 aus.

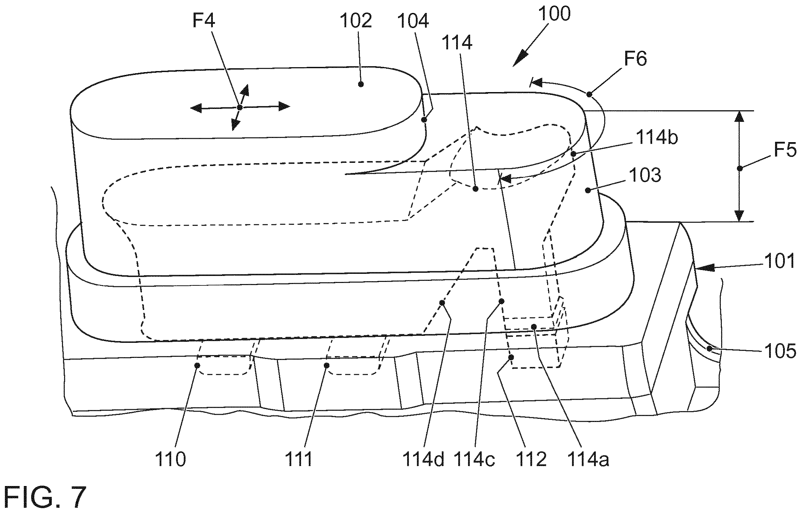

In Fig. 7 wird nunmehr die Vorrichtung 100 noch etwas detaillierter beschrieben.

Es ist erkennbar, dass der Lichtleiter 114 in etwa die Form eines Damenschuhs aufweist, mit einem absatzartigen Teil 114c und einem vorderen Teil 114d.

Der Teil 114c realisiert die eigentliche Lichtleitung für das von dem Leuchtmittel 112 ausgesendete Licht von der Lichteinkoppelfläche 114a bis hin zur Lichtauskoppelfläche 114b. An dieser Darstellung wird deutlich, dass der Lichtaustrittsbereich 103 im Umriss (von oben betrachtet) halbkreisartig ausgebildet ist, mit der in der Figur vertikalen Flächenerstreckung F5 und einer horizontalen, halbkreisartigen Flächenerstreckung F6.

Der bereits erwähnte, vordere Teil 114d des Lichtleiters 114 hingegen, dient lediglich zum "Einfangen" des von den Leuchtmitteln 110 und 111 ausgesendeten Lichtes. Das Licht wird im Wesentlichen gerade durch den Teil 114d in Richtung des Lichtaustrittsbereichs 102 hindurchgeleitet.

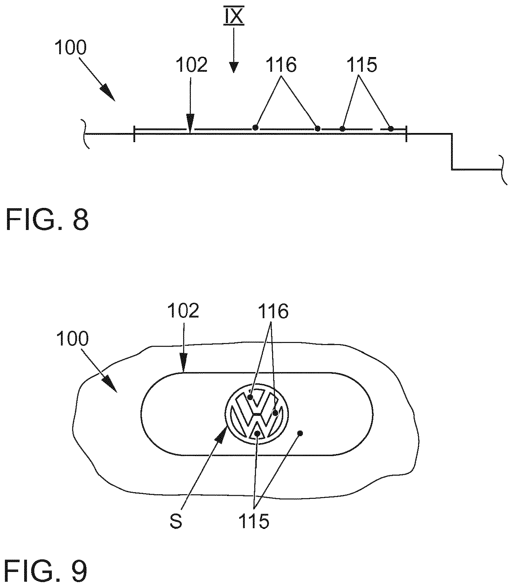

Aus den Fig. 8 und 9 ist ersichtlich, dass der Lichtaustrittsbereich 102 der Vorrichtung 100 mit einer lichtundurchlässigen Schicht 115 versehen sein kann. In die Schicht 115 sind lichtdurchlässige Bereich 116 derart eingebracht, dass in einer Draufsicht auf den Lichtaustrittsbereich 102 ein Symbol S entsteht (in den Figuren zuvor nicht dargestellt).

Das Symbol S ist vorzugsweise ein Markensymbol und dient zu einer markenspezifischen Individualisierung des Ladeklappenmoduls 1 für einen Bediener.

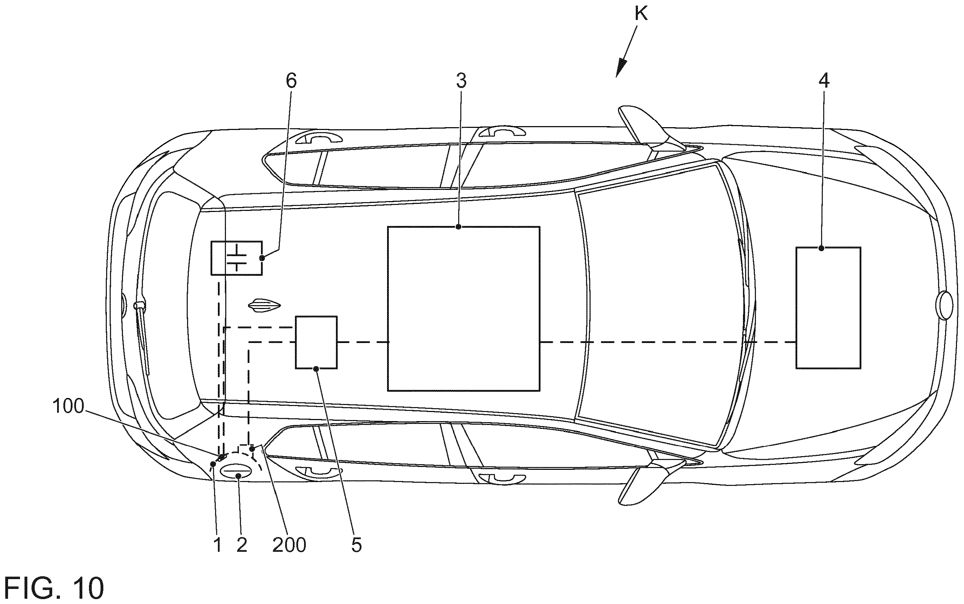

Schließlich zeigt die Fig. 10 ein elektrisch antreibbares Kraftfahrzeug K, welches mit einem erfindungsgemäßen Ladeklappenmodul 1 ausgestattet ist.

Das Ladeklappenmodul 1 ist über eine Abdeckklappe 2 abgedeckt beziehungsweise abdeckbar.

Mittels des Ladeklappenmoduls 1 kann durch Einstecken eines nicht gezeigten Ladesteckers ein kraftfahrzeugseitiger Energiespeicher 3 in Form einer Traktionsbatterie aufgeladen werden. Die elektrische Energie des Energiespeichers 3 dient zur Versorgung eines elektrischen Antriebsmotors 4 mit elektrischer Energie.

Das Ladeklappenmodul 1 beziehungsweise die Vorrichtung 100 ist (wie die Schnittstelle 200) elektrisch bzw. signaltechnisch mit einer Energiemanagementeinrichtung 5 verbunden. Die Energiemanagementeinrichtung 5 sorgt beim Aufladen des Energiespeichers 3 für das richtige Energiemanagement, beispielsweise für die Höhe des Ladestroms. Des Weiteren dient die Energiemanagementeinrichtung 5 zur Ansteuerung der Vorrichtung 100 in Abhängigkeit des aktuellen Ladezustands des Energiespeichers 3. Die Vorrichtung 100 ist elektrisch mit einer Bordbatterie 6 verbunden.

### Ein Aufladevorgang kann nun beispielhaft wie folgt ablaufen:

Nach Entriegelung des Kraftfahrzeugs K und Öffnen der Abdeckklappe 2 werden die Leuchtmittel 110 bis 112 der Vorrichtung 100 zunächst derart angesteuert, dass sie weißes Licht, insbesondere weißes Dauerlicht, aussenden. Auf diese Weise wird durch die Öffnung 17 eine optimale Suchbeleuchtung für die Schnittstelle 200 ermöglicht. Ein Bediener kann somit schnell die Schnittstelle 200 orten und einen Ladestecker in die Schnittstelle 200 einstecken.

Nach dem Einstecken des Ladesteckers und Beginn des Ladevorgangs wechselt die Farbe des von den Leuchtmitteln 110 bis 112 ausgesendeten Lichts L (vergleiche beispielsweise Fig. 7) in die Farbe Grün. Außerdem wird das Licht L blinkend ausgesendet, um dem Bediener den beginnenden beziehungsweise noch andauernden Ladezustand zu verdeutlichen.

Wird über die Energiemanagementeinrichtung 5 festgestellt, dass der Energiespeicher 3 voll aufgeladen ist, so wird die Vorrichtung 100 derart angesteuert, dass von den Leuchtmitteln 110 bis 112 grünes Dauerlicht angezeigt wird.

Tritt während des Ladevorgangs ein Fehler auf, so wird die Vorrichtung 100 derart angesteuert, dass die Leuchtmittel 110 bis 112 rotes Dauer- oder Blinklicht aussenden.

### Bezugszeichenliste

- 1: Lade- und/oder Tankklappenmodul
- 2: Abdeckklappe
- 3: kraftfahrzeugseitiger Energiespeicher; Traktionsbatterie
- 4: elektrischer Antriebsmotor
- 5: Energiemanagementeinrichtung
- 6: Bordbatterie
- 10: mulden- oder wannenartiges Zweikomponenten-Bauteil
- 11: Hartkomponente
- 12: Öffnung
- 13: Weichkomponente
- 14: Öffnung
- 15: Verriegelungselement
- 16: Öffnung
- 17: Öffnung
- 18: Flächennormale

- 100, 100': Vorrichtung
- 101: Gehäuse
- 101a: Oberteil
- 101b: Unterteil
- 102: Lichtaustrittsbereich
- 103: Lichtaustrittsbereich
- 104: Absatz
- 105: Befestigungsmittel
- 106: Öffnung
- 107: Steckanschluss
- 108: Platine
- 109: Platine
- 110: Leuchtmittel
- 111: Leuchtmittel
- 112: Leuchtmittel
- 113: Platine
- 114: Lichtleiter
- 114a: Lichteinkoppelstelle
- 114b: Lichtauskoppelstelle
- 114c: absatzartiger Teil
- 114d: vorderer Teil
- 115: lichtundurchlässige Schicht
- 116: lichtdurchlässige Bereiche

- 200: Schnittstelle zum Aufladen und/oder Betanken

- a: Abstand
- E1, E2: Ebenen
- F1 - F6: Flächenerstreckungen
- K: Kraftfahrzeug
- L: Licht
- S: Symbol
- α: Winkel
- β: Winkel

## Patentansprüche

1. Lade- und/oder Tankklappenmodul (1) für ein Kraftfahrzeug (K) zur Aufnahme oder Anlage wenigstens einer Schnittstelle (200) zum Aufladen und/oder Betanken eines kraftfahrzeugseitigen Energiespeichers (3), und zur Befestigung wenigstens einer Leuchtmittel (110, 111, 112) aufweisenden Vorrichtung (100, 100'), die sowohl zur Beleuchtung des Lade- und/oder Tankklappenmoduls (1) als auch zur Anzeige des aktuellen Lade- und/oder Tankfüllstandes des Energiespeichers (3) dient, **dadurch gekennzeichnet, dass** das Lade- und/oder Tankklappenmodul (1) wenigstens eine erste Öffnung (16) und eine zu dieser benachbarte, zweite Öffnung (17) aufweist, wobei die Öffnungen (16, 17) zur zumindest teilweisen Aufnahme der Vorrichtung (100, 100') dienen und derart ausgerichtet sind, dass abgegebenes oder abgebbares Licht (L) der montierten Vorrichtung (100, 100') aus der ersten Öffnung (16) in Richtung eines Bedieners austreten kann und aus der zweiten Öffnung (17) in Richtung der Schnittstelle (200) zum Aufladen und/oder Betanken des Energiespeichers (3), wobei die Vorrichtung (100, 100') durch ein Gehäuse (101) gebildet ist, welches lösbar mit dem Lade- und/oder Tankklappenmodul (1) verbunden ist.

2. Lade- und/oder Tankklappenmodul (1) nach dem vorhergehenden Anspruch, **dadurch gekennzeichnet, dass** die erste Öffnung (16) und die zweite Öffnung (17) Flächenerstreckungen (F1, F2) aufweisen, die in einem rechten Winkel (α) zueinanderstehen.

3. Lade- und/oder Tankklappenmodul (1) nach Anspruch 2, **dadurch gekennzeichnet, dass** die erste Öffnung (16) in einer ersten Ebene (E1) liegt und eine weitere Öffnung (14) zur Aufnahme oder Anlage der wenigstens einen Schnittstelle (200) in einer zweiten Ebene (E2), wobei die Ebenen (E1, E2) in einem Winkel (β) einander zugewandt sind.

4. Lade- und/oder Tankklappenmodul (1) nach einem der vorhergehenden Ansprüche, **dadurch gekennzeichnet, dass** es durch ein Zweikomponenten-Bauteil (10) gebildet ist, wobei die Öffnungen (16, 17) für die Vorrichtung (100, 100') in einer Hartkomponente (11) ausgebildet sind und wenigstens eine weitere Öffnung (14) zur Aufnahme oder Anlage der wenigstens einen Schnittstelle (200) in einer Weichkomponente (13) des Zweikomponenten-Bauteils (10).

5. Vorrichtung (100, 100') zur Beleuchtung eines nach einem der vorhergehenden Ansprüche ausgebildeten Lade- und/oder Tankklappenmoduls (1) und zur Anzeige eines aktuellen Lade- und/oder Tankfüllstandes eines mittels des Lade- und/oder Tankklappenmoduls (1) aufladbaren und/oder auftankbaren Energiespeichers (3), **dadurch gekennzeichnet, dass** die Vorrichtung (100, 100') durch ein Gehäuse (101) gebildet ist, in dem wenigstens zwei Leuchtmittel (110, 111, 112) aufgenommen sind, wobei erzeugtes oder erzeugbares Licht (L) wenigstens eines Leuchtmittels (110, 111) an einem ersten lichtdurchlässigen Lichtaustrittsbereich (102) und erzeugtes oder erzeugbares Licht (L) wenigstens eines anderen Leuchtmittels (112) an einem zweiten lichtdurchlässigen Lichtaustrittsbereich (103) aus dem Gehäuse (101) austritt, wobei der erste Lichtaustrittsbereich (102) das Licht (L) in eine andere Richtung austreten lässt als der zweite Lichtaustrittsbereich (103) und wobei das Gehäuse (101) Befestigungsmittel (105) zur lösbaren Befestigung mit dem Lade- und/oder Tankklappenmodul (1) aufweist.

6. Vorrichtung nach Anspruch 5, **dadurch gekennzeichnet, dass** der erste Lichtaustrittsbereich (102) mit einer Flächenerstreckung (F4) senkrecht zu einer Flächenerstreckung (F5) des zweiten Lichtaustrittsbereichs (103) steht.

7. Vorrichtung nach einem der Ansprüche 5 bis 6, **dadurch gekennzeichnet, dass** das über den zweiten Lichtaustrittsbereich (103) aus dem Gehäuse (101) austretende Licht (L) über einen Lichtleiter (114) vom Leuchtmittel (112) zum Lichtaustrittsbereich (103) geleitet wird.

8. Vorrichtung nach Anspruch 7, **dadurch gekennzeichnet, dass** der Lichtleiter (114) eingekoppeltes Licht (L) um 90° umlenkt.

9. Vorrichtung nach einem der Ansprüche 5 bis 8, **dadurch gekennzeichnet, dass** der erste Lichtaustrittsbereich (102) mit einer lichtundurchlässigen Schicht (115) überzogen ist, wobei die Schicht (115) bereichsweise derart entfernt ist, dass dadurch ein Symbol (S) ausgebildet wird.

10. Vorrichtung nach einem der Ansprüche 5 bis 9, **dadurch gekennzeichnet, dass** das Gehäuse (101) wenigstens einen Steckanschluss (107) zur Verbindung mit einem Steckverbinder aufweist.

11. Kraftfahrzeug (K), **gekennzeichnet durch** wenigstens ein Lade- und/oder Tankklappenmodul (1) nach einem der Ansprüche 1 bis 4.

## Claims

1. Charging and/or fuel tank lid module (1) for a motor vehicle (K) for receiving or supporting at least one interface (200) for charging and/or refuelling an energy storage unit (3) on the side of the motor vehicle, and for attaching at least one apparatus (100, 100') that has light-emitting means (110, 111, 112) and serves both for illuminating the charging and/or fuel tank lid module (1) and for indicating the current charging and/or fuel tank fill level of the energy storage unit (3), **characterized in that** the charging and/or fuel tank lid module (1) has at least a first opening (16) and a second opening (17) adjacent to the former, wherein the openings (16, 17) serve for at least partially receiving the apparatus (100, 100') and are oriented such that emitted or emittable light (L) of the mounted apparatus (100, 100') can exit from the first opening (16) in the direction of an operator and from the second opening (17) in the direction of the interface (200) for charging and/or refuelling the energy storage unit (3), wherein the apparatus (100, 100') is formed by a housing (101) that is releasably connected to the charging and/or fuel tank lid module (1).

2. Charging and/or fuel tank lid module (1) according to the preceding claim, **characterized in that** the first opening (16) and the second opening (17) have surface extents (F1, F2) that are at right angles (α) to each other.

3. Charging and/or fuel tank lid module (1) according to Claim 2, **characterized in that** the first opening (16) lies in a first plane (E1) and a further opening (14) for receiving or supporting the at least one interface (200) lies in a second plane (E2), wherein the planes (E1, E2) face each other at an angle (β).

4. Charging and/or fuel tank lid module (1) according to one of the preceding claims, **characterized in that** it is formed by a two-component structural part (10), wherein the openings (16, 17) for the apparatus (100, 100') are embodied in a hard component (11) and at least one further opening (14) for receiving or supporting the at least one interface (200) is embodied in a soft component (13) of the two-component structural part (10).

5. Apparatus (100, 100') for illuminating a charging and/or fuel tank lid module (1) embodied according to one of the preceding claims and for indicating a current charging and/or fuel tank fill level of an energy storage unit (3) that is able to be charged and/or filled by means of the charging and/or fuel tank lid module (1), **characterized in that** the apparatus (100, 100') is formed by a housing (101) in which at least two light-emitting means (110, 111, 112) are housed, wherein generated or generatable light (L) of at least one light-emitting means (110, 111) exits the housing (101) at a first light-transmissive light exit region (102) and generated or generatable light (L) of at least one other light-emitting means (112) exits the housing (101) at a second light-transmissive light exit region (103), wherein the first light exit region (102) lets the light (L) exit in a different direction than the second light exit region (103) and wherein the housing (101) has attachment means (105) for the releasable attachment to the charging and/or fuel tank lid module (1).

6. Apparatus according to Claim 5, **characterized in that** a surface extent (F4) of the first light exit region (102) is perpendicular to a surface extent (F5) of the second light exit region (103).

7. Apparatus according to one of Claims 5 to 6, **characterized in that** the light (L) exiting the housing (101) via the second light exit region (103) is guided via a light guide (114) from the light-emitting means (112) to the light exit region (103).

8. Apparatus according to Claim 7, **characterized in that** the light guide (114) deflects coupled-in light (L) by 90°.

9. Apparatus according to one of Claims 5 to 8, **characterized in that** the first light exit region (102) is covered with an opaque layer (115), wherein the layer (115) is regionally removable such that a symbol (S) is formed thereby.

10. Apparatus according to one of Claims 5 to 9, **characterized in that** the housing (101) has at least one plug connection (107) for connecting to a plug connector.

11. Motor vehicle (K), **characterized by** at least one charging and/or fuel tank lid module (1) according to one of Claims 1 to 4.

## Revendications

1. Module de trappe de chargement et/ou à carburant (1) pour un véhicule automobile (K), permettant de recevoir ou d'appliquer au moins une interface (200) destinée à recharger et/ou à faire le plein d'un accumulateur d'énergie (3) côté véhicule automobile, et permettant de fixer au moins un dispositif (100, 100') présentant des moyens d'éclairage (110, 111, 112) et servant à la fois à éclairer le module de trappe de chargement et/ou à carburant (1) et à afficher l'état de charge et/ou de remplissage de réservoir actuel de l'accumulateur d'énergie (3), **caractérisé en ce que** le module de trappe de chargement et/ou à carburant (1) présente au moins une première ouverture (16) et une deuxième ouverture (17) adjacente à celle-ci, les ouvertures (16, 17) servant à recevoir le dispositif (100, 100') au moins en partie et étant orientées de telle sorte que la lumière émise ou pouvant être émise (L) du dispositif installé (100, 100') peut sortir de la première ouverture (16) en direction d'un utilisateur et peut sortir de la deuxième ouverture (17) en direction de l'interface (200) destinée à recharger et/ou à faire le plein de l'accumulateur d'énergie (3), le dispositif (100, 100') étant réalisé par un boîtier (101) qui est relié de manière amovible au module de trappe de chargement et/ou à carburant (1) .

2. Module de trappe de chargement et/ou à carburant (1) selon la revendication précédente, **caractérisé en ce que** la première ouverture (16) et la deuxième ouverture (17) présentent des étendues de surface (F1, F2) qui sont placées à angle droit (α) l'une par rapport à l'autre.

3. Module de trappe de chargement et/ou à carburant (1) selon la revendication 2, **caractérisé en ce que** la première ouverture (16) se situe dans un premier plan (E1) et une ouverture supplémentaire (14) destinée à recevoir ou à appliquer ladite au moins une interface (200) se situe dans un deuxième plan (E2), les deux plans (E1, E2) étant tournés l'un vers l'autre selon un angle (β).

4. Module de trappe de chargement et/ou à carburant (1) selon l'une quelconque des revendications précédentes, **caractérisé en ce qu'**il est formé par une pièce à deux composants (10), les ouvertures (16, 17) pour le dispositif (100, 100') étant réalisées par un composant rigide (11), et au moins une ouverture supplémentaire (14) destinée à recevoir ou à appliquer ladite au moins une interface (200) étant réalisée par un composant souple (13) de la pièce à deux composants (10) .

5. Dispositif (100, 100') permettant d'éclairer un module de trappe de chargement et/ou à carburant (1) réalisé selon l'une quelconque des revendications précédentes et permettant d'afficher un état de charge et/ou de remplissage de réservoir actuel d'un accumulateur d'énergie (3) pouvant être rechargé et/ou ravitaillé en carburant au moyen du module de trappe de chargement et/ou à carburant (1), **caractérisé en ce que** le dispositif (100, 100') est formé par un boîtier (101) dans lequel sont reçus au moins deux moyens d'éclairage (110, 111, 112), dans lequel la lumière (L) générée ou pouvant être générée d'au moins un moyen d'éclairage (110, 111) sort du boîtier (101) au niveau d'une première zone de sortie de lumière transparente (102), et la lumière (L) générée ou pouvant être générée d'au moins un autre moyen d'éclairage (112) sort au niveau d'une deuxième zone de sortie de lumière transparente (103), la première zone de sortie de lumière (102) laissant sortir la lumière (L) dans une autre direction que la deuxième zone de sortie de lumière (103), et le boîtier (101) présentant des moyens de fixation (105) pour une fixation amovible au module de trappe de chargement et/ou à carburant (1).

6. Dispositif selon la revendication 5, **caractérisé en ce que** la première zone de sortie de lumière (102) présente une étendue de surface (F4) perpendiculaire à une étendue de surface (F5) de la deuxième zone de sortie de lumière (103).

7. Dispositif selon l'une quelconque des revendications 5 à 6, **caractérisé en ce que** la lumière (L) sortant du boîtier (101) par la deuxième zone de sortie de lumière (103) est guidée par un guide de lumière (114) du moyen d'éclairage (112) à la zone de sortie de lumière (103).

8. Dispositif selon la revendication 7, **caractérisé en ce que** le guide de lumière (114) dévie de 90° la lumière injectée (L).

9. Dispositif selon l'une quelconque des revendications 5 à 8, **caractérisé en ce que** la première zone de sortie de lumière (102) est recouverte d'une couche opaque (115), la couche (115) étant retirée par endroits de façon à réaliser ainsi un symbole (S).

10. Dispositif selon l'une quelconque des revendications 5 à 9, **caractérisé en ce que** le boîtier (101) présente au moins une connexion enfichable (107) destinée à une connexion avec un connecteur enfichable.

11. Véhicule automobile (K), **caractérisé par** au moins un module de trappe de chargement et/ou à carburant (1) selon l'une quelconque des revendications 1 à 4.
